# FASCICULE DE BREVET EUROPEEN

(11) **EP 2 758 452 B1**
(45) Date de publication et mention de la délivrance du brevet: **17.04.2019**
(21) Numéro de dépôt: 12769350.5
(22) Date de dépôt: 18.09.2012
(51) Int. Cl.: C08G 73/10, C08J 3/12, C08L 79/08

(54) **POLYIMIDES THERMOPLASTIQUES**
THERMOPLASTISCHE POLYIMIDE
THERMOPLASTIC POLYIMIDES

(30) Priorité: 20.09.2011 FR 1158321
(43) Date de publication de la demande: 30.07.2014
(73) Titulaire: Rhodia Operations, 93306 Aubervilliers (FR)
(72) Inventeur: JEOL, Stéphane, 69006 Lyon (FR); MOLLET, Vincent, 69540 Irigny (FR); PACI, Benjamin, 57140 Woippy (FR)
(74) Mandataire: Vande Gucht, Anne
(86) Numéro de dépôt international: PCT/EP2012/068364
(87) Numéro de publication internationale: WO 2013/041528

(56) Documents cités:
- WO-A1-2013/041530
- US-A- 2 867 609
- US-A- 3 624 050
- US-A- 3 677 921
- US-A- 5 093 202
- US-B1- 6 646 060

## Description

La présente invention concerne des polyimides thermoplastiques et leur synthèse. L'invention concerne notamment un procédé de fabrication de polyimides semi-aromatiques thermoplastiques par polymérisation à l'état solide d'un sel solide de carboxylate d'ammonium formé à partir d'une diamine aliphatique et d'un acide tétracarboxylique aromatique, permettant l'obtention de poudres de granulométries contrôlées.

### ART ANTERIEUR

Les polyimides (PI) aromatiques sont des polymères présentant des propriétés thermiques et mécaniques remarquables, ce qui les destine légitimement à des applications hautes performances dans différents domaines, notamment l'aéronautique. Néanmoins, ces polyimides aromatiques sont considérés comme thermodurs et infusibles et nécessitent l'utilisation de procédés de synthèse en solution dans des solvants toxiques, notamment cancérigènes ou potentiellement cancérigènes pour certains, et/ou non amicaux pour l'environnement à partir de diamines aromatiques et de dianhydrides aromatiques. Le procédé de synthèse des polyimides le plus connu et répandu est un procédé deux étapes qui consiste à faire réagir dans une première étape dans un solvant, comme le diméthyle acétamide, les crésols ou encore dans la N-méthylpyrrolidone, un dianhydride aromatique avec une diamine aromatique pour former un intermédiaire appelé polyacide amique, qui est ensuite transformé en polyimide dans une seconde étape par élévation de la température ou par une déshydratation chimique.

Lors de la première étape, les amines ouvrent les cycles anhydride et donnent lieu à une fonction amide acide appelée souvent acide amique. Le polyacide amique formé est soluble dans le solvant de synthèse et est transformé par cyclisation en polyimide qui le plus souvent est insoluble. Par exemple, pour faire un film en polyimide, on verse une solution de polyacide amique sur une surface chauffante. Lors du chauffage de la surface chauffante, le solvant s'évapore et la cyclisation se fait: on obtient alors un film de polyimide.

Il apparaît clairement que les très hautes performances des polyimides aromatiques nécessitent l'utilisation de monomères cancérigènes, comme le sont les diamines aromatiques, des procédés de synthèse et de mise en forme complexes et/ou peu respectueux de l'environnement, notamment nécessitant l'utilisation de solvants toxiques et/ou cancérigènes . En outre, ces polyimides aromatiques sont souvent considérés comme des polymères thermodurcissables en raison de leur caractère non fusibles.

Pour rendre les polyimides aromatiques fusibles, donc transformables, par les techniques d'extrusion ou d'injection notamment, il est connu d'utiliser des diamines aromatiques plus flexibles donnant lieu à des polyimides amorphes de température de transition vitreuse Tg proche de 200°C connus sous le nom de polyétherimide dont Ultem est un nom commercial. Des procédés développés consistent à réaliser la polymérisation à l'état fondu entre 275 et 290°C comme dans le brevet US3833546 à partir d'un mélange direct de dianhydride aromatique et de diamine aromatique ou d'acide tétracarboxylique aromatique et de diamine aromatique. Dans ce cas, le contrôle de la stoechiométrie des réactifs n'est pas optimal, des réactions de dégradation rapides ont lieu. Le premier inconvénient est, encore une fois, l'utilisation de diamines aromatiques. Le deuxième inconvénient est que lorsque la température d'utilisation est supérieure à la Tg du polyimide, le polyimide perd sa tenue mécanique en raison de son caractère amorphe. Enfin, en tant que polymère amorphe, les propriétés mécaniques dépendent principalement de la masse molaire qui doit être supérieure à la masse molaire entre enchevêtrements : pour ces polymères, cela implique d'avoir des masses molaires non négligeables, ce qui s'accompagne d'une viscosité importante à l'état fondu. Ces polyimides aromatiques flexibles sont malgré tout considérés comme des thermoplastiques.

Les polyimides semi-aromatiques constituent une approche intéressante aux problèmes posés car ils peuvent être semi-cristallins et avoir des températures de fusion compatibles avec les températures de transformation des thermoplastiques, une température de fusion généralement inférieure à 330°C, et donc être transformables par les procédés de mise en oeuvre connus pour les thermoplastiques, similaires à des polyamides, tout en bénéficiant d'une excellente tenue en température.

Il existe différentes méthodes de synthèse, à commencer par la synthèse en solution comme décrite pour les polyimides aromatiques. Un exemple de synthèse en solution de polyimide est décrite par Cor Koning dans la revue Polymer 1998, volume 39, 16, pages 3697-3702. Les auteurs synthétisent des polyimides en solution à partir de dianhydride 3,3'-4,4'-biphényletétracarboxylique et de diamines aliphatiques contenant entre 4 et 10 groupes méthylènes. Les polyimides obtenus possèdent des températures de fusion inférieures à 330°C. Des polymérisations à l'état fondu sont décrites le brevet US2710853 ou US2867609 à partir de diamine aliphatique et d'anhydride pyromellitique ou de dérivés diester diacide d'anhydride pyromellitique selon des procédés connus de synthèse de polyamides.

US2867609 décrit un procédé de préparation de particules solides de polyimide 10PMA semi-aromatique et semi-cristallin comprenant les étapes (a) la préparation d'un sel par réaction entre l'anhydride pyromellitique et une diamine aliphatique, (b) la polymérisation à l'état solide du sel de l'étape (a) à une température T de 196°C et à pression atmosphérique, et (c) la récupération des particules solides de polyimide.

L'inconvénient majeur de cette technique est qu'elle nécessite de choisir une température de synthèse supérieure à la température de fusion du polyimide formé pendant des temps longs, ce qui engendre des dégradations thermiques significatives et importantes.

Pour remédier à ce problème, une équipe japonaise (Inoue et al dans Macromolecules 1997, 30, 1921-1928 « High Pressure Synthesis of Aliphatic-Aromatic Polyimides via Nylon-Salt-Type Monomers derived from aliphatic diamines and pyromellitic acid and biphenyltetracarboxylic acid ») a identifié une méthode de polymérisation de sel d'acide tétracarboxylique aromatique et de diamines aliphatiques à l'état solide. Les auteurs préparent ainsi un sel qui est pressé sous des pressions de plusieurs centaines de bar pour donner lieu à des objets tels des disques, et chauffent ensuite les disques formés à une température donnée sous différentes pressions. Lors du chauffage, la réaction se produit et génère de l'eau, ce qui montre que la réaction a eu lieu et se ferait très rapidement. En revanche, ces objets formés sont non manipulables et inutilisables en tant que tels.

Le problème des procédés envisagés par ces auteurs réside dans le fait qu'il est nécessaire d'extraire l'eau de réaction formée lors de la mise en forme, ce qui peut engendrer des défauts dans les pièces, des temps longs de transformation engendrant des coûts de transformation excessifs et/ou peuvent donner des pièces de qualité non optimale avec des problèmes de porosité et d'aspect de surface, ou encore nécessiter d'adapter et/ou de changer les équipements destinés à l'utilisation de polymères non réactifs.

En outre, les procédés existants peuvent se révéler insatisfaisant en termes de contrôle de la masse molaire et/ou de la viscosité du polyimide. Or ceci est particulièrement important, ne serait-ce que par rapport au type de mise en forme envisagée.

Il était donc nécessaire de mettre au point un procédé de préparation de tels polyimides semi-aromatiques permettant de remédier à ces inconvénients en tout ou partie.

Par ailleurs, il existe des applications pour lesquelles il est nécessaire que les polymères se présentent sous la forme de poudres. C'est le cas notamment du frittage laser ou des procédés de fabrication de composites à fibres continues à partir de poudres par poudrage d'étoffes ou pultrusion de monofil de verre ou de carbone, ou encore d'autres procédés. Les technologies de production de poudres de polymères connues nécessitent soit de dissoudre un polymère dans un solvant et de précipiter dans un non solvant ; mais ceci implique l'utilisation de solvants toxiques et cancérigènes, soit de mélanger à l'état fondu le polymère avec une espèce non miscible de sorte à générer une ségrégation du polymère souhaitée, soit de broyer des granulés de polymères formulés ce qui impose des étapes de micronisation et de séchages supplémentaires. Quel que soit le cas cité, les procédés sont complexes et coûteux.

En outre, les polyimides obtenus par les procédés de l'art antérieur, notamment par voie solide et/ou diesters, peuvent présenter une viscosité relative et/ou une masse molaire insatisfaisante, et/ou une variation de leur viscosité relative et/ou de leur masse molaire avant et après fusion de celui-ci.

La présente invention vise donc également à l'obtention de polyimides permettant de résoudre en tout ou partie les problème évoqués ci-dessus.

### INVENTION

Il vient d'être mis en évidence par la demanderesse qu'il était possible de préparer de manière industrielle et efficace de la poudre de polyimides semi-aromatiques pour diverses applications. Ceci est rendu possible par l'utilisation d'une polymérisation à l'état solide d'un sel solide de carboxylate d'ammonium formé à partir d'une diamine aliphatique et d'un acide tétracarboxylique aromatique. Les polyimides obtenus sont des thermoplastiques semi-cristallins et ont comme propriété de ne pas libérer ou absorber de l'eau lors des étapes ultérieures de transformation comme par exemple la pultrusion, l'extrusion, ou le moulage par injection. Le procédé de l'invention permet l'obtention de poudres de granulométries contrôlées puisque la réaction de polymérisation se produit à l'état solide.

On peut notamment utiliser ces poudres pour la réalisation d'articles composites, pour la production d'articles par frittage laser, pour le revêtement, ou dans le domaine de la cosmétique.

Par ailleurs, la polymérisation à l'état solide permet d'éviter l'utilisation de solvants cancérigènes ou néfastes pour l'environnement.

Un autre avantage du procédé de l'invention est la faculté d'effectuer une polymérisation à une température relativement faible permettant d'éviter des dégradations thermiques du sel et du polyimide formé.

La présente invention concerne ainsi un procédé d'obtention de particules solides de (co)polyimide (I) semi-aromatique et semi-cristallin présentant un diamètre médian D50 compris entre 0,01 et 2 mm, ledit (co)polyimide est thermoplastique et présente une température de fusion comprise entre 50 et 350°C, comprenant au moins les étapes suivantes :
(a) on place dans un réacteur un sel formé par une réaction entre au moins une diamine aliphatique et au moins un acide tétracarboxylique aromatique ;
(b) on effectue une polymérisation à l'état solide à partir du sel de l'étape (a) pour obtenir le (co)polyimide (I) à une pression absolue comprise entre 0,005 et 1 MPa et à une température T obéissant à la relation suivante :
   ***Tf du* sel de *l'étape (a) > T > Tg du (co)polyimide (I) à obtenir***
(c) on récupère les particules solides de (co)polyimide (I).

Par « sel de carboxylate d'ammonium » ou « sel formé par une réaction entre au moins une diamine aliphatique et au moins un acide tétracarboxylique aromatique » on entend au sens de la présente invention un sel dans lequel les entités diamines et acides tétracarboxyliques sont liées uniquement par des interactions polaires, en particulier du type -COO⁻ H₃⁺N-, et non par liaison(s) covalente(s). Plus particulièrement le sel comprend un acide tétracarboxylique et une diamine, lesquels ne sont pas liés par liaison covalente. En particulier, le sel peut présenter la structure suivante, avec Ar représentant un groupement aromatique:

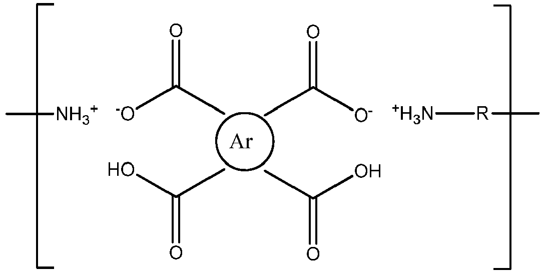

L'invention concerne également des particules solides de (co)polyimide (I) susceptibles d'être obtenues par le procédé tel que décrit précédemment.

La présente invention concerne également des particules solides de (co)polyimide (I) semi-aromatique et semi-cristallin présentant un diamètre médian D50 compris entre 0,01 et 2 mm, ledit polyimide est thermoplastique et présente une température de fusion comprise entre 50 et 350°C ; ce (co)polyimide étant obtenu à partir d'un sel formé par une réaction entre au moins une diamine aliphatique et au moins un acide tétracarboxylique aromatique.

Enfin, l'invention concerne un (co)polyimide susceptible d'être obtenu, et en particulier directement obtenu, par le procédé selon l'invention. Ledit (co)polyimide peut présente une viscosité relative stable. En particulier, il peut présenter, après 40 minutes à une température égale à Tf+15°C, soit une température supérieure de 15°C à la température de fusion du (co)polyimide, une variation de sa viscosité relative inférieure ou égale à 10 %. Ceci peut être mesuré de la manière décrite dans les exemples.

Tout particulièrement, le (co)polyimide obtenu est blanc, notamment il présente une caractéristiques colorimétriques CIE b*≤10.

Le (co)polyimide peut présenter une masse molaire moyenne en nombre et/ou une viscosité relative sensiblement stable, en particulier comparée(s) avant et après fusion du (co)polyimide, en particulier après 10 minutes à l'état fondu, plus particulièrement après 20 minutes à l'état fondu, voire après 40 minutes à l'état fondu. Par « sensiblement stable », on peut entendre une variation inférieure ou égale à 10 %.

### Définitions

On entend par semi-cristallin, un polyimide présentant une phase amorphe et une phase cristalline, ayant par exemple un taux de cristallinité compris entre 1% et 85%. Les (co)polyimides selon la présente invention présentent préférentiellement une température de transition vitreuse Tg inférieure ou égale à 200°C, plus préférentiellement inférieure à 150°C.

On entend par polyimide thermoplastique, un polyimide présentant une température au-delà de laquelle la matière se ramollit et fond et qui, au dessous de celle-ci, devient dure.

On entend par diamètre médian D50, la médiane qui sépare en deux parties d'aires égales la courbe de répartition granulométrique en volume. Les analyses granulométriques peuvent être effectuées au moyen d'un granulomètre à diffraction laser Mastersizer X à banc optique étendu de la Société Malvern Instruments SA permettant de caractériser des tailles de particules comprises entre 2 et 2000 µm. La distribution étant volumique, le diamètre médian correspondra à 50% du volume total des particules. De plus, le diamètre médian donné, correspond au diamètre d'une sphère équivalente ; en supposant que tous les objets ont une forme équivalente à une sphère.

La détermination de la température de fusion du sel est préférentiellement effectuée par la mesure de la température de fin de l'endotherme mesurée par calorimétrie différentielle à balayage (DSC « Differential Scanning Calorimetry »), à l'aide d'un appareil Perkin Elmer Pyris 1, en chauffant le sel à partir de 20°C à une vitesse de 10°C/min.

La détermination de la température de fusion du (co)polyimide est préférentiellement effectuée au pic de l'endotherme de fusion mesurée par calorimétrie différentielle à balayage (DSC « Differential Scanning Calorimetry »), à l'aide d'un appareil Perkin Elmer Pyris 1, en chauffant le (co)polyimide à partir de 20°C à une vitesse de 10°C/min.

On entend par particules selon la présente invention des objets pouvant prendre diverses formes telles que des formes sphériques, sensiblement sphériques, quasi-sphériques, polyédriques, ovoïdes et/ou ellipsoïdales et pouvant présenter en surface des aspérités ou de petites cavités formant des irrégularités, générés par des bulles de gaz par exemple. Les particules peuvent être des microbilles, des perles, des agrégats, des granules, des agglomérats, des grains, de la poudre ou autres.

La présente invention concerne la synthèse de (co)polyimides (I) à partir d'un ou plusieurs acides tétracarboxyliques aromatiques et une ou plusieurs diamines aliphatiques. Les polymères obtenus à partir d'une seule diamine et d'un seul acide tétracarboxylique sont des polyimides, généralement appelés homopolyimides. La réaction entre au moins 3 monomères différents produit un copolyimide, tout particulièrement deux diamines et un acide tétracarboxylique ou une diamine et deux acides tétracarboxyliques. Les (co)polyimides peuvent être définis par la composition molaire en chaque monomère constitutif.

### Monomères

Les acides tétracarboxyliques aromatiques de l'invention présentent préférentiellement des fonctions acides carboxyliques dans des positions telles qu'elles permettent généralement de former deux fonctions anhydrides d'acides sur une même molécule par une réaction de déshydratation. Les acides tétracarboxyliques de la présente invention présentent généralement deux paires de fonctions acides carboxyliques, chaque paire de fonction étant liée à un atome de carbone adjacent, en α et β. Les fonction acides tétracarboxyliques peuvent être obtenues à partir de dianhydrides d'acides par hydrolyse des fonctions anhydrides. Des exemples de dianhydrides d'acides et d'acide tétracarboxyliques, dérivés des dianhydrides, sont décrits dans le brevet US7932012.

Les acides tétracarboxyliques aromatiques de l'invention peuvent également porter des groupes fonctionnels, tels que notamment par exemple le groupe - SO₃X, avec X=H ou un cation, tels que Na, Li, Zn, Ag, Ca, Al, K et Mg.

On préfère notamment les acides tétracarboxyliques aromatiques choisis dans le groupe comprenant : l'acide pyromellitique, l'acide 3,3',4,4'-biphényltétracarboxylique, l'acide 2,3,3',4'-biphényltétracarboxylique, l'acide 2,2',3,3'-biphényltétracarboxylique, l'acide 3,3',4,4'-benzophénonetétracarboxylique, l'acide 2,2',3,3'-benzophénonetétracarboxylique, l'acide 1,2,5,6-naphthalènetétracarboxylique, l'acide 2,3,6,7-naphthalènetétracarboxylique, l'acide 2,3,5,6-pyridinetétracarboxylique, l'acide 3,4,9,10-perylènetétracarboxylique, l'acide 3,3',4,4'-tétraphénylsilanetétracarboxylique, et l'acide 2,2'-bis-(3,4-bicarboxyphenyl) hexafluoropropane tétracarboxylique.

Les diamines aliphatiques de l'invention peuvent être décrites comme des molécules de formule H₂N-R-NH₂ avec un radical R divalent hydrocarboné et aliphatique, saturé ou insaturé, linéaire ou branché, cycloaliphatique ou alkylaromatique, comprenant éventuellement un ou plusieurs hétéroatomes.

Le radical R comprend généralement de 2 à 50 atomes de carbone, préférentiellement de 6 à 36 atomes de carbone. Le radical R peut éventuellement contenir un ou plusieurs hétéroatomes, tel que O, N, P ou S. Le radical R peut comprendre un ou plusieurs groupes fonctionnels comme des fonctions hydroxyles, sulfones, cétones, éthers ou autres.

Par « diamine aliphatique », on entend au sens de la présente invention un composé dans lequel les fonctions amines sont chacune portées par un carbone aliphatique, en particulier par un carbone sp³. Tout particulièrement, les fonctions amines sont des amines primaires. Les diamines de l'invention sont dites aliphatiques dans la mesure où les fonctions amines ne sont pas liées de manière covalente à un atome de carbone d'un groupement aromatique, comme un phényle par exemple. Ainsi, les diamines aliphatiques peuvent comprendre :
- un groupement R aliphatique saturé,
- un groupement R aliphatique insaturé, en particulier les fonctions amines sont chacune portées par alkylaromatique, dans ce cas les fonctions amines ne sont pas portées par un carbone du groupement aromatique, et en particulier les fonctions amines sont chacune portés par des carbones tétragonaux, ou sp³.

Les diamines peuvent notamment être des diamines en positions α,ω contenant de 15 à 20 groupes méthylènes. Les diamines de l'invention portent préférentiellement deux fonctions amine primaire.

Les diamines aliphatiques peuvent par exemple être choisies dans le groupe comprenant : le 1,2-diaminoéthane, le 1,3-diaminopropane, le 1,4-diaminobutane, le 1,5-diaminopentane, le 2-méthyl-1,5-diaminopentane, l'hexaméthylène diamine, la 3-méthyl-hexaméthylène diamine, la 2,5-diméthyl-hexaméthylène diamine, la 2,2,4- et 2,4,4-triméthyl-hexaméthylène diamine, le 1,7-diaminoheptane, le 1,8-diaminooctane, la 2,2,7,7-tétraméthyl-octaméthylène diamine, le 1,9-diaminonane, la 5-méthyl-1,9-diaminononane, le 1,10-diaminodécane, le 1,11-diaminoundécane, le 1,12-diaminododécane, le 1,13-diaminotridécane, le 1,14-diaminotétradécane.

Les diamines cycloaliphatiques sont par exemple choisies dans le groupe comprenant l'isophorone diamine, le 1,3-diaminocyclohexane, le 1,4-diaminocyclohexane, et le diaminodicyclohexyl-méthane.

Les diamines alkylaromatiques sont par exemple de formule H₂N-(CH₂)n-Ph-(CH₂)n'-NH₂ avec n et n' étant des nombres entiers non nuls, indépendants l'un de l'autre, et avantageusement compris entre 1 et 4 et Ph étant un groupe phényle. On peut citer par exemple la méta-xylylène diamine et la para-xylylène diamine.

On peut citer des exemples de diamines contenant des hétéroatomes comme les polyétherdiamines telles que les Jeffamine® et Elastamine® commercialisées par Hunstman. Il existe une variété de polyéther, composés de motifs oxyde d'éthylène, oxyde de propylène, oxyde de tétraméthylène.

### Etape (a)

Lors de l'étape (a) du procédé, on place ainsi dans un réacteur un sel formé par une réaction entre au moins une diamine aliphatique et au moins un acide tétracarboxylique. Tout particulièrement, la diamine aliphatique et l'acide tétracarboxylique sont uniquement présents sous forme de sel.

Un tel sel peut être synthétisé de diverses manières, connues de l'homme du métier.

On peut par exemple procéder à une addition d'une diamine aliphatique dans une solution comprenant l'acide tétracarboxylique. On peut également dissoudre l'acide tétracarboxylique dans un solvant tel que de l'alcool, comme l'éthanol ou du méthanol par exemple, et faire de même pour la diamine aliphatique. Ces deux solutions sont alors mélangées sous agitation. Le sel de carboxylate d'ammonium formé peut être insoluble dans le solvant utilisé et ainsi précipiter. Le sel peut alors être récupéré par filtration, lavé et séché et éventuellement broyé.

On peut également réaliser une solution de sel de carboxylate d'ammonium puis la concentrer à chaud et ensuite la refroidir. Le sel cristallise alors et les cristaux sont récupérés et séchés. La concentration de la solution peut être obtenue par évaporation du solvant comme l'eau ou l'alcool ou selon un autre procédé par addition d'acide tétracarboxylique et/ou de diamine aliphatique. On peut également procéder à une saturation de la solution, c'est-à-dire effectuer un procédé qui permet de modifier la concentration du sel dans la solution à une valeur compatible avec une cristallisation de celui-ci. Généralement cette concentration est au moins égale et plus préférentiellement supérieure à la concentration de saturation du sel à la température considérée. Plus précisément, cette concentration correspond à une sursaturation de la solution du sel. On peut également travailler à une pression permettant d'évaporer le solvant de la solution, tel que l'eau ou l'alcool, pour saturer la solution et provoquer la cristallisation. On peut aussi saturer la solution par addition successive ou simultanée d'un flux d'acide tétracarboxylique et d'un flux de diamine dans une solution de sel.

A titre d'exemple, on dissout l'acide tétracarboxylique dans de l'alcool, comme l'éthanol par exemple, dans un premier milieu. On dissout la diamine aliphatique dans de l'alcool dans un autre milieu et on mélange ensuite les deux milieux sous agitation. Le sel obtenu précipite.

A la fin de cette synthèse le sel peut être sous forme de poudre sèche, sous forme de poudre dispersée dans un solvant, ou dissout en solution. On peut récupérer le sel par filtration dans le cas d'un précipitât et désagréger le gâteau de filtration si nécessaire. Dans le cas ou le sel est dissout en solution, on peut le récupérer par un procédé de cristallisation par concentration, sursaturation ou en le faisant précipiter par addition d'un non solvant. Le sel cristallisé peut alors être récupéré par filtration et le gâteau de filtration peut être désagrégé si nécessaire. Un autre procédé permettant de récupérer les particules dispersées de sel sec est l'atomisation de la solution, c'est-à-dire notamment une opération d'évaporation soudaine du solvant pulvérisé sous forme de fines gouttelettes afin de récupérer les particules dispersées de sel.

Il est enfin possible de cribler la dimension des particules de sel, par exemple par tamisage ou broyage.

### Etape (b)

Lors de l'étape (b) du procédé, on effectue ainsi une polymérisation à l'état solide à partir du sel de l'étape (a) pour obtenir le (co)polyimide (I) à une pression absolue comprise entre 0,005 et 1 MPa et à une température T obéissant à la relation telle que décrite précédemment. Par « polymérisation à l'état solide », on entend au sens de la présente invention une polymérisation qui n'est pas effectuée en solution ou en suspension dans un solvant, ni à l'état fondu. Notamment la polymérisation n'implique pas l'ajout de solvant, à la ou aux poudre(s) placée(s) dans le réacteur.

La pression absolue lors de l'étape (b) est préférentiellement comprise entre 0,005 MPa et 0,2 MPa.

La température lors de l'étape (b) est préférentiellement comprise entre 50°C et 250°C.

Le procédé de polymérisation à l'état solide peut être réalisé selon les procédés classiques connus de l'homme du métier. Le principe fondamental de ces procédés consiste à porter le sel de départ, sous air ou dans une atmosphère inerte ou sous vide, à une température inférieure à son point de fusion mais suffisante pour permettre la réaction de polymérisation, généralement supérieure à la température de transition vitreuse du (co)polyimide. Un tel procédé peut donc comprendre brièvement :
a) un chauffage du produit par diffusion conductive, convective ou par radiation,
b) un inertage par application de vide, balayage par un gaz neutre tel que l'azote, le CO₂, ou la vapeur surchauffée, ou application d'une surpression,
c) une élimination du sous-produit de condensation par évaporation puis, balayage du gaz vecteur ou concentration de la phase gaz,
d) une agitation mécanique ou fluidisation de la phase solide par le gaz vecteur ou vibrations peut être souhaitable afin d'améliorer les transferts thermiques et massiques et également prévenir tout risque d'agglomération du solide divisé.

Préférentiellement, on utilise dans l'étape b) un moyen de maintien en mouvement des particules de sel de (co)polyimides afin de prévenir une agrégation de ces particules. On peut utiliser pour ce faire une agitation mécanique, tel qu'un agitateur, une mise en rotation du réacteur, ou une agitation par vibrations, ou une fluidification par un gaz vecteur.

La masse molaire moyenne en nombre Mn des polyimides peut être comprise entre 500 g/mol à 50000 g/mol.

Le contrôle de la masse molaire moyenne en nombre peut être obtenu :
- par l'utilisation de limiteurs de chaînes, c'est-à-dire des molécules choisies parmi les monoamines, les monoanhydrides, les monoacides ou les diacides en positions α,β tels qu'ils peuvent former une fonction anhydride par réaction de déshydratation, parmi les limiteurs de chaîne on peut citer l'anhydride phtalique, l'acide 1,2-benzènedicarboxylique (ou acide ortho-phtalique), l'acide acétique, l'acide propionique, l'acide benzoïque, l'acide stéarique, la benzylamine, le 1-aminopentane, 1-aminohexane, le 1-aminoheptane, le 1-aminooctane, le 1-aminononane, le 1-aminodécane, le 1-aminoundécane, et le 1-aminododécane, la benzylamine, et leurs mélanges.
- par un déséquilibre stoechiométrique r=[acide tétracarboxylique]/[diamine]
- par l'utilisation d'agents de branchement, c'est-à-dire des molécules de fonctionnalité supérieure à 3
- par l'ajustement des conditions opératoires de synthèses telles que le temps de séjour, la température, l'humidité ou la pression
- par une combinaison de ces différents moyens.

En particulier le déséquilibre stoechiométrique r peut aller de 1,01 à 1,2. C'est-à-dire que le déséquilibre est en particulier lié à un excès d'acide

Selon un mode de réalisation particulier, le sel est :
- additionné de limiteurs de chaînes et/ou
- additionné d'un excès d'un des monomères, en particulier acide tétracarboxylique, afin de créer un déséquilibre stoechiométrique, c'est-à-dire afin que r soit différent de 1.

Selon une variante, le limiteur de chaîne et/ou l'excès stoechiométrique est additionné au sel de l'étape (a) déjà formé.

Selon une autre variante, le limiteur de chaîne et/ou l'excès stoechiométrique d'un des monomère est également sous forme de sel, en particulier il forme un sel avec la diamine aliphatique et/ou avec l'acide tétracarboxylique. Il peut donc s'agir d'un sel présentant un déséquilibre stoechiométrique et/ou d'un co-sel ou sel mixte de diamine aliphatique, d'acide tétracarboxylique et de limiteur de chaîne. Tout particulièrement, le limiteur de chaine et/ou l'excès stoechiométrique est présent lors de la formation du sel de l'étape (a) et est additionné en même temps que l'espèce lui correspondant, par exemple le limiteur de type acide est en mélange avec l'acide tétracarboxylique et le limiteur de type amine est en mélange avec la diamine aliphatique.

Dans ce deuxième cas, le limiteur de chaîne permet la formation de sel, et notamment peut être choisi dans les listes ci-dessus, à l'exception des anhydrides.

La teneur en limiteur de chaîne peut aller de 0,1 à 10 % en nombre de moles, notamment de 1 à 5% en nombre de moles, par rapport au nombre total de moles de monomères, c'est à dire acide tétracarboxylique, diamine et limiteur de chaine.

Lorsqu'un limiteur de chaine est utilisé, les quantités d'amines et d'acides peuvent être équilibrées, c'est-à-dire que la somme de fonctions amines est sensiblement égale à la moitié de la somme de fonctions acides avec lesquelles elles peuvent réagir. Par « sensiblement égale » on entend une différence maximum de 1 %.

Lorsqu'un limiteur de chaine est utilisé, les quantités d'amines et d'acides peuvent être déséquilibrées, c'est-à-dire que la somme de fonctions amines est sensiblement différente à la moitié de la somme de fonctions acides avec lesquelles elles peuvent réagir. Par « sensiblement différente » on entend une différence d'au moins 1 %.

L'invention a ainsi également pour objet un sel d'acide tétracarboxylique et de diamine:
- dans lequel est également présent un limiteur de chaîne et/ou
- présentant un déséquilibre stoechiométriques,
ainsi que l'utilisation d'un tel sel pour former un (co)polyimide et un procédé de préparation de (co)polyimide utilisant un tel sel.

Le contrôle de la stoechiométrie peut être fait à n'importe quel moment du procédé de fabrication.

On peut utiliser des catalyseurs, ajoutés à n'importe quel moment du procédé, tel que par exemple en mélange avec la diamine et/ou l'acide tétracarboxylique, en mélange au sel formé, soit en solution, soit par imprégnation à l'état solide.

### Etape (c)

Cette étape peut permettre l'obtention des particules souhaités sans qu'un broyage mécanique supplémentaire ne soit nécessaire. En revanche, il peut être utile de procéder à une désagrégation de particules qui peuvent être agglomérées.

### Compositions

On peut utiliser le (co)polyimide de l'invention pour faire de compositions qui sont généralement obtenues par mélange des différents composés, charges et/ou additifs. On procède à plus ou moins haute température, à plus ou moins haute force de cisaillement selon la nature des différents composés. Les composés peuvent être introduits simultanément ou successivement. On utilise généralement un dispositif d'extrusion dans lequel la matière est chauffée, puis fondue et soumise à une force de cisaillement, et véhiculée. On peut, selon des modes de réalisations particuliers, effectuer des pré-mélanges, en fondu ou non, avant préparation de la composition finale. On peut par exemple effectuer un pré-mélange dans une résine, par exemple du (co)polyimide, de façon à réaliser un mélange maitre.

L'invention concerne ainsi également un procédé de fabrication d'une composition par mélange, en fondu ou non, de particules solides de (co)polyimides (I) avec des charges de renfort ou de remplissage et/ou des agents modificateurs du choc et/ou des additifs.

La composition selon l'invention peut éventuellement comprendre un ou plusieurs autres polymères.

La composition selon l'invention peut comprendre entre 20 et 90 % en poids, préférentiellement entre 20 et 70 % en poids, et plus préférentiellement entre 35 et 65% en poids de (co)polyimide selon l'invention obtenu par le procédé de polymérisation tel que décrit précédemment, par rapport au poids total de la composition.

La composition peut en outre comprendre des charges de renfort ou de remplissage. Les charges de renfort ou de remplissage sont des charges classiquement utilisées pour la réalisation de compositions thermoplastiques, notamment à base de polyamide. On peut notamment citer les charges fibreuses de renfort, telles que telles que des fibres de verre, des fibres de carbone, ou des fibres organiques, les charges non fibreuses, telles que des charges particulaires, lamellaires et/ou les nanocharges exfoliables ou non exfoliables comme l'alumine, le noir de carbone, les argiles, le phosphate de zirconium, le kaolin, le carbonate de calcium, le cuivre, les diatomées, le graphite, le mica, la silice, le dioxyde de titane, les zéolites, le talc, la wollastonite, les charges polymériques telles que, par exemple, des particules de diméthacrylates, les billes de verre ou de la poudre de verre. On préfère notamment utiliser les fibres de renfort, telles que les fibres de verre.

La composition selon l'invention peut comprendre entre 5 et 60 % en poids de charges de renfort ou de remplissage, préférentiellement entre 10 et 40 % en poids, par rapport au poids total de la composition.

La composition selon l'invention comprenant le (co)polyimide tel que défini précédemment peut comprendre au moins un agent modificateur du choc, c'est-à-dire un composé capable de modifier la résistance aux chocs d'une composition (co)polyimide. Ces composés modificateurs du choc comprennent préférentiellement des groupements fonctionnels réactifs avec le (co)polyimide. On entend selon l'invention par groupements fonctionnels réactifs avec le (co)polyimide, des groupements capables de réagir ou d'interagir chimiquement avec les fonctions résiduelles anhydride, acide ou amine du (co)polyimide, notamment par covalence, interaction ionique ou hydrogène ou liaison de van der Walls. De tels groupements réactifs permettent d'assurer une bonne dispersion des agents modificateurs de chocs dans la matrice (co)polyimide. On peut citer par exemple les fonctions anhydrides, époxydes, esters, amines, acides carboxyliques, les dérivés carboxylates ou sulfonates.

La composition selon l'invention peut en outre comprendre des additifs généralement utilisés pour la fabrication de compositions polyimides ou polyamides. Ainsi, on peut citer les lubrifiants, les agents ignifugeants, les plastifiants, les agents nucléants, les agents anti-UV, les catalyseurs, les antioxydants, les antistatiques, les colorants, les matifiants, les additifs d'aide au moulage ou autres additifs conventionnels.

Ces charges, agents de renfort de chocs et/ou additifs peuvent être ajoutés au (co)polyimide par des moyens usuels adaptés biens connus dans le domaine des plastiques techniques, tel que par exemple lors de la salification, après la salification, lors de la polymérisation à l'état solide, ou en mélange en fondu.

Les compositions polyimides sont généralement obtenues par mélange des différents composés entrant dans la composition à froid ou en fondu. On procède à plus ou moins haute température, à plus ou moins haute force de cisaillement selon la nature des différents composés. Les composés peuvent être introduits simultanément ou successivement. On utilise généralement un dispositif d'extrusion dans lequel la matière est chauffée, puis fondue et soumise à une force de cisaillement, et véhiculée.

On peut mélanger tous les composés en phase fondue au cours d'une unique opération, par exemple au cours d'une opération d'extrusion. On peut par exemple procéder à un mélange de granulés des matériaux polymériques, les introduire dans le dispositif d'extrusion afin de les fondre et de les soumettre à un cisaillement plus ou moins important. On peut, selon des modes de réalisations particuliers, effectuer des pré-mélanges, en fondu ou non, de certains des composés avant préparation de la composition finale.

### Applications

Le (co)polyimide ou les diverses compositions selon l'invention peuvent être utilisées pour tout procédé de mise en forme de fabrication d'articles plastiques. En particulier dans le cas où une bonne fluidité est souhaitable, comme l'injection ou l'extrusion en fondu, le (co)polyimide est déséquilibré et/ou comprend des limiteurs de chaîne.

L'invention concerne ainsi également un procédé de fabrication d'article plastique mettant en oeuvre des particules solides de (co)polyimide (I). On peut citer à cette effet diverses techniques telles que le procédé de moulage, notamment le moulage par injection, l'extrusion, l'extrusion soufflage, ou encore le rotomoulage, notamment dans le domaine de l'automobile ou de l'électronique et de l'électricité par exemple. Le procédé d'extrusion peut notamment être un procédé de filage ou de fabrication de films.

La présente invention concerne par exemple la fabrication d'articles de type étoffes imprégnées ou articles composites à fibres continues. Ces articles peuvent notamment être fabriqués par mise en présence d'une étoffe et des particules de (co)polyimide selon l'invention à l'état solide ou fondu. Les étoffes sont des surfaces textiles obtenues par assemblage de fils ou de fibres solidarisés par un procédé quelconque, tel que notamment collage, feutrage, tressage, tissage, tricotage. Ces étoffes sont aussi désignées comme des réseaux fibreux ou filamenteux, par exemple à base de fibres de verre, de fibres de carbone ou autres. Leur structure peut être aléatoire, unidirectionnelle (1D), ou multidirectionnelle (2D, 2,5D, 3D ou autre).

Les particules de (co)polyimides de l'invention peuvent notamment être utilisées dans des procédés de fabrication d'articles par fusion sélective de couches de poudre de polymères, notamment le prototypage rapide par frittage en phase solide à l'aide d'un laser. La fabrication par fusion sélective de couches est un procédé de fabrication d'articles consistant à déposer des couches de matériaux sous forme de poudre, à fondre de manière sélective une partie ou un domaine d'une couche, et de venir déposer une nouvelle couche de poudre et de fondre de nouveau une partie de cette couche et ainsi de suite de manière à obtenir l'objet désiré. La sélectivité de la partie de la couche à fondre est obtenue par exemple grâce à l'utilisation d'absorbeurs, d'inhibiteurs, de masques, ou à travers l'apport d'énergie focalisée, comme par exemple un rayonnement électromagnétique tel qu'un rayon laser. On préfère notamment le frittage par additivation de couches, particulièrement le prototypage rapide par frittage à l'aide d'un laser.

Le terme et/ou inclut les significations et, ou, ainsi que toutes les autres combinaisons possibles des éléments connectés à ce terme.

D'autres détails ou avantages de l'invention apparaîtront plus clairement au vu des exemples donnés ci-dessous uniquement à titre indicatif.

### PARTIE EXPERIMENTALE

### Normes de mesures

Les températures de fusion (Tf) et de cristallisation au refroidissement (Tc) des (co)polyimides sont déterminées par calorimétrie différentielle à balayage (DSC « Differential Scanning Calorimetry »), à l'aide d'un appareil Perkin Elmer Pyris 1, à une vitesse de 10°C/min. Les Tf et Tc des (co)polyimides sont déterminées au sommet des pics de fusion et de cristallisation. La température de transition vitreuse (Tg) déterminée sur le même appareil à une vitesse de 40 °C/min (lorsque cela est possible, elle est déterminée à 10°C/min et spécifiée dans les exemples). Les mesures sont faîtes après fusion du (co)polyimide formé à T>(Tf du (co)polyimide + 20°C).

Pour la détermination de la température de fusion du sel, on considère la température de fin de l'endotherme mesurée par chauffage du sel à 10°C/min.

L'Analyse Thermo-Gravimétrique (ATG) est réalisée sur un appareil Perkin-Elmer TGA7 sur un échantillon d'environ 10 mg. Les conditions précises d'utilisation (température, temps, vitesse de chauffe) sont définies dans les exemples.

L'analyse thermogravimétrique permet de déterminer la stabilité thermique des polyimides mais nous l'utilisons également ici pour calculer le rendement de la réaction de transformation du sel en polyimide de la manière suivante :
- Chauffage à 10°C/min d'un échantillon de sel polymérisé par le procédé de l'invention de 30°C à 300°C. Détermination de la perte de masse observée notée y%.
- Détermination du taux de réaction η par le calcul η = (1+x)/(1+y)-1, avec x le rapport de la masse molaire du « sel PI » en g/mol sur la masse molaire d'une unité répétitive PI. Par exemple, pour le PI 12PMA préparé à partir d'acide pyromellitique (PMA) et de 1,12-diaminododécane, x=15,85%; pour le PI 13PMA préparé à partir de PMA et de 1,13-diaminotridécane, x=15,38%.

L'analyse infra-rouge par transformée de Fourier (IRTF) est effectuée sur appareil Bruker Vector 22 (en réflexion, ATR Diamant) sur la poudre de polyimide formé.

L'analyse RMN du proton est effectuée sur un spectromètre Bruker AV500 dans un mélange D₂O/CD₃OD 50/50 en volume à température ambiante pour les sels et dans le m-crésol à 110°C ou le D₂SO₄ à 300 Kelvin pour les polyimides.

L'analyse de la granulométrie est réalisée sur un appareil SYMPATEC HELOS H1302 en voie sèche avec une pression de dispersion de 2 bar d'azote.

L'analyse colorimétrique CIE L*a*b* est effectuée sur un chromomètre Minolta CR-310.

### Exemple 1 : Préparation d'un polyimide PI 12PMA à partir d'un sel 12PMA synthétisé dans l'éthanol pur

Dans un réacteur de 5L sont introduits 40 g (0,15mol) d'acide pyromellitique à 94,9% (Sigma-Aldrich) et 2 litres d'éthanol pur. Le milieu réactionnel est agité et chauffé à 70°C sous léger balayage d'azote. Dans un ballon de 1L, on dissout 30,5 g (0,15mol) de 1,12-diaminododécane à 98% (TCI Europe N.V.) dans 500 mL d'éthanol pur à température ambiante. Cette solution est ensuite placée dans une ampoule de coulée raccordée au réacteur 5L et ajoutée goutte-à-goutte en 1 heure à la solution éthanolique d'acide pyromellitique. Le contact entre la diamine et l'acide pyromellitique engendre la formation d'un sel qui précipite immédiatement sous agitation vigoureuse. Le milieu réactionnel est maintenu sous agitation vigoureuse pendant 3h 30 min à 70°C et sous azote.

La poudre de sel est récupérée par filtration sur Büchner et lavée à l'éthanol, puis broyée et séchée sous vide à 50°C pendant une nuit. Le rendement massique est de 95%. La poudre est blanche et fine. La température de fusion du sel est de 260°C.

### Polymérisation

La poudre de sel 12PMA est placée dans un ballon cannelé fixé sur un appareil rotavapeur et mis sous léger balayage d'azote. La pression est égale à la pression atmosphérique. Le ballon est plongé dans un bain d'huile à 200°C et mis en rotation pendant 8 heures. La poudre de PI 12PMA obtenue est blanche, parfaitement sèche. Les particules présentent un diamètre médian D50 de 73 µm. Une analyse en ATG est effectuée sur le produit final, par une chauffe de 40°C à 300°C à 10°C/min. Il n'apparaît aucune perte de masse détectable, indiquant que la poudre de sel 12PMA s'est transformée de manière quantitative en poudre de PI 12PMA.

L'analyse IRTF de la poudre de PI 12PMA présente les bandes d'absorption caractéristiques des fonctions imide à 1699 et 1767 cm⁻¹ et on note l'absence de bandes d'absorption caractéristiques des fonctions amine. L'analyse RMN du proton confirme la présence de fonctions imides formées et la stoechiométrie 1 :1 des motifs issus des diamines et acides tétracarboxyliques, c'est-à-dire l'absence de perte de monomères lors de la production de la poudre de PI 12PMA.

La poudre de PI 12PMA a une température de fusion de 303°C (enthalpie de fusion ΔHf=35J/g), une température de cristallisation de 274°C et une Tg=101°C.

### Extrusion

La poudre de PI 12PMA est extrudée sous la forme de jonc en plaçant 10 g du PI 12PMA ainsi préparés dans une micro-extrudeuse bi-vis (« micro-compounder ») DSM MIDI 2000 (volume 15 cm³) préalablement chauffé à 340 °C et avec une vitesse de vis de 100 tours par minute.

La micro-extrudeuse possède un canal de recirculation qui permet d'ajuster le temps de séjour dans la bi-vis. Nous avons choisi 1 min de temps de séjour : le couple exercé sur le moteur de rotation des vis est stable, signe que le milieu fondu évolue peu. Après 1 minute de temps de séjour, le polyimide fondu est extrudé sous la forme d'un jonc et coulé dans un bac d'eau puis granulé. Les propriétés thermiques du polyimide sont Tf=305°C, et Tc=287°C.

### Exemple comparatif 1 : polymérisation du sel PI 12PMA à une température de fusion supérieure à Tf sel

Le sel PI 12PMA de l'exemple 1 est polymérisé au-delà de la température de fusion du sel : il est chauffé sous azote de la température ambiante à 300°C à une vitesse de chauffage de 10°C/min et maintenu 1 minute à 300°C puis refroidi immédiatement à température ambiante.

L'analyse thermique du polyimide obtenu montre que la température de fusion est de 290°C et la température de cristallisation est de 266°C. Il apparaît que ce mode de polymérisation, par rapport à la polymérisation de l'invention décrite dans l'exemple 1, engendre une diminution des températures de fusion (-13°C) et de cristallisation (-8°C) du polyimide : les deux polyimides, bien que de structure chimique similaire, présentent une architecture macromoléculaire différente.

### Exemple 2 : Préparation d'un polyimide PI 12PMA à partir d'un sel 12PMA synthétisé dans un mélange eau/éthanol

Dans un ballon tricol de 350mL sont introduits 2,684 g (0,009 mol) d'acide pyromellitique à 84,1% (les impuretés étant de l'eau) et 150 mL d'un mélange eau/ethanol 50/50 en volume. Le milieu réactionnel est agité et chauffé à 80°C sous léger balayage d'azote : l'acide pyromellitique est ainsi solubilisé. Dans un ballon de 100 mL, on dissout 1,83 g (0,009mol) de 1,12-diaminododécane à 98% dans 50 mL d'un mélange eau/éthanol 50/50 en volume à température ambiante. Cette solution est ensuite placée dans une ampoule de coulée raccordée au réacteur 350 mL et ajoutée goutte-à-goutte en 1 heure à la solution éthanolique d'acide pyromellitique. Cette fois-ci, aucun précipité ne se forme lors du contact entre la diamine et l'acide pyromellitique : le sel formé se solubilise immédiatement. Le milieu réactionnel est maintenu sous agitation pendant 3h à 80°C et sous azote.

On évapore ensuite 100 mL du mélange eau/éthanol par chauffage à 130°C à pression atmosphérique puis le milieu réactionnel est ramené à température ambiante. Le réacteur est ensuite plongé dans de l'eau à 5°C pour faire cristalliser le sel. Le sel est récupéré par filtration sur Büchner, broyé et lavé à l'éthanol, puis séché sous vide à 50°C pendant une nuit. Le rendement massique est de 94%. Il se présente sous la forme d'une poudre blanche fine.

### Polymérisation

La poudre de sel 12PMA est polymérisée par chauffage à 200°C pour donner une poudre de PI 12PMA. Une analyse DSC du polyimide ainsi formé montre que la température de fusion est égale à Tf= 308°C, et la température de cristallisation est de Tc=273°C. Il apparaît que la température de fusion est légèrement supérieure à celle du PI 12PMA fait à partir d'un sel dans l'éthanol pur.

Nous pouvons voir que lorsque le sel 12PMA est fait en solution dans un mélange eau/éthanol, c'est-à-dire dans un milieu dans lequel il est soluble, cela a une incidence sur les propriétés thermiques finales du polyimide fait de cette manière.

### Exemple 3: Préparation d'un polyimide PI 13PMA à partir d'un sel 13PMA synthétisé dans l'éthanol pur

Le 1,13-diaminotridécane est synthétisé à partir d'une nitrilation d'un acide 1,13-tridécanedicarbxylique à 99% (Zibo Guangtong Chem) suivie d'une hydrogénation. La pureté de la diamine en C13 est de 93%.

Dans un réacteur de 5L sont introduits 40 g (0,15mol) d'acide pyromellitique à 94,9% et 2 litres d'éthanol pur. Le milieu réactionnel est agité et chauffé à 70°C sous léger balayage d'azote. Dans un ballon de 1L, on dissout 34,5 g (0,15mol) de 1,13-diaminotridécane à 93% dans 500 mL d'éthanol pur à température ambiante. Cette solution est ensuite placée dans une ampoule de coulée raccordée au réacteur 5L et ajoutée goutte-à-goutte en 1 heure à la solution éthanolique d'acide pyromellitique. Le contact entre la diamine et l'acide pyromellitique engendre la formation d'un sel qui précipite immédiatement sous agitation. Le milieu réactionnel est maintenu sous agitation vigoureuse pendant 3h 30 min à 70°C et sous azote.

La poudre de sel est récupérée par filtration sur Büchner et lavée à l'éthanol, broyée puis séchée sous vide à 50°C pendant une nuit. Le rendement massique est de 85%, dû à des pertes lors de la vidange du réacteur. La poudre est blanche et fine. La température de fusion du sel est de 230°C.

### Polymérisation

La poudre de sel 13PMA est placée dans un ballon cannelé fixé sur un appareil rotavapeur et mis sous léger balayage d'azote. La pression est égale à la pression atmosphérique. Le ballon est plongé dans un bain d'huile à 200°C et mis en rotation pendant 8 heures. La poudre de PI 13PMA obtenue est blanche et parfaitement sèche. Les particules présentent un diamètre médian D50 de 179 µm. Une analyse en ATG est effectuée sur le produit final, par une chauffe de 40°C à 300°C à 10°C/min. Il n'apparaît aucune perte de masse détectable, indiquant que la poudre de sel 13PMA s'est transformée de manière quantitative en poudre de PI 13PMA.

L'analyse IRTF de la poudre de PI 13PMA présente les bandes d'absorption caractéristiques des fonctions imide à 1700 et 1767 cm⁻¹ et on note l'absence de bandes d'absorption caractéristiques des fonctions amine.

La poudre de PI 13PMA a une température de fusion de 271°C (ΔHf= 36J/g), une température de cristallisation de 238°C et une Tg=93°C.

### Extrusion

La poudre de PI 13PMA est extrudée sous la forme de jonc en plaçant 10 g du PI 13PMA ainsi préparés dans une micro-extrudeuse bi-vis (« micro-compounder ») DSM MIDI 2000 (volume 15 cm³) préalablement chauffé à 300°C et avec une vitesse de vis de 100 tours par minute.

La température de fusion du jonc de PI 13PMA extrudé à partir de poudre est de 270°C, c'est-à-dire identique à la température de fusion de la poudre PI 13PMA avant extrusion. On notera que l'extrusion est plus facilement réalisable avec le PI 13PMA qu'avec le PI 12PMA, qui doit être mise en oeuvre à plus haute température.

### Injection

La poudre de PI 13PMA est injectée à l'aide d'une micro-presse à injecter associée au « micro-compounder » par fusion du PI 13PMA à 300°C et injection dans un moule régulé à 200°C pour former des barreaux de dimension 80x12x2 mm³. Les barreaux sont rigides mais présentent une certaine flexibilité.

### Exemple 4: Préparation de copolyimides PI 10PMA/12PMA de 100/0, 75/25, 50/50, 25/75 et 0/100 mol/mol par synthèse de co-sels

Selon une même procédure que celle de l'exemple 1, on ajoute cette fois-ci une solution éthanolique d'acide pyromellitique goutte à goutte dans une quantité stoechiométrique d'un mélange de 1,10-diaminodecane (diamine C10) et de 1,12-diaminododécane (diamine C12) solubilisées dans l'éthanol pur. Le ratio molaire des deux diamines C10/C12 choisi est de 100/0 (exemple 4A), 75/25 (exemple 4B), 50/50 (exemple 4C), 25/75 (exemple 4D) et 0/100 (exemple 4E). Les sels formés précipitent immédiatement et sont récupérés par évaporation du solvant, est mis à sécher une nuit sous vide à 50°C. Une poudre de PI formé est réalisée par traitement thermique à 200°C de la poudre de sel puis analysée en DSC. On observe en premier lieu que tous les copolyimides sont semi-cristallins.

On observe également dans le tableau 1 suivant, que les copolyimides présentent une seule température de fusion, signifiant qu'il s'agit de copolymères capables de co-cristalliser. Cette température de fusion peut être comprise entre les Tf des deux homopolyimides ou même inférieure. Il apparaît également que l'enthalpie de fusion est inférieure à l'enthalpie de fusion des homopolymères mais qu'elle reste élevée quelle que soit la composition molaire des diamines.

**Tableau 1**

| **PI 10PMA/12PMA** | **Tf SEL °C** | **TfPI °C** | **ΔHfPI J/g** | **TcPI °C** | **TgPI* °C** |
|---|---|---|---|---|---|
| 4A | 245 | 334 | 47 | 306 | 115 |
| 4B | 242 | 294 | 19 | 274 | 109 |
| 4C | 237 | 269 | 26 | 255 | 104 |
| 4D | 238 | 285 | 30 | 261 | 100 |
| 4E | 260 | 303 | 35 | 274 | 96 |

| | | | | | |
|---|---|---|---|---|---|
| * La Tg est déterminée à 10°C/min | | | | | |

### Exemple 5: Préparation de polyimide PI 12PMA de faible viscosité par déséquilibre stoechiométrique à partir d'un sel 12PMA synthétisé dans l'éthanol pur

Afin d'obtenir des polyimides préparés à partir de sel de polyimides ayant une viscosité plus faible, un excès d'un des deux monomères a été introduit.

Exemple 5A: dans un réacteur de 2L sont introduits 17,538 g (0,0674 mol) d'acide pyromellitique à 97,6% et 600 g d'éthanol pur. Le milieu réactionnel est agité sous léger balayage d'azote. Dans un ballon de 500 mL, on dissout 13,373 g (0,066 mol) de 1,12-diaminododécane à 98,9% (TCI Europe N.V.) dans 260 g d'éthanol pur à 60°C. Cette solution est ensuite placée dans une ampoule de coulée raccordée au réacteur 2L et ajoutée goutte-à-goutte en 30 min à la solution éthanolique d'acide pyromellitique. Le contact entre la diamine, la monoamine et l'acide pyromellitique engendre la formation d'un sel qui précipite immédiatement sous agitation vigoureuse. Le milieu réactionnel est chauffé à 70°C et maintenu sous agitation vigoureuse pendant 2h 30 min sous azote. La poudre de sel est récupérée par évaporation de l'éthanol, puis broyée et séchée sous vide à 45°C pendant une nuit. Le rendement massique est de 99,1%. La poudre est blanche et fine. Le rapport stoechiométrique R=[acide pyromellitique]/[diamine] est égal à 1,02.

La poudre de sel est placée dans un ballon cannelé fixé sur un appareil rotavapeur et mis sous léger balayage d'azote. La pression est égale à la pression atmosphérique. Le ballon est plongé dans un bain d'huile à 200°C et mis en rotation pendant 5 heures. La poudre de PI 12PMA obtenue est blanche et parfaitement sèche.

La poudre de polyimide obtenue est analysée par mesure de la viscosité relative solution dans l'acide sulfurique à 96% d'une solution à 10 g/L de polyimide dans un tube Ubbelohde de diamètre 1,03 mm associé à un viscosimètre SHOTT de référence AVS350 et à une température de 25°C. La viscosité relative est de 2,06.

Les exemples 5B, 5C et 5D sont effectués en utilisant le même procédé que pour l'exemple 5A mais en changeant le rapport stoechiométrique R, respectivement égal à 1,04, 1,08, 1,12. Dans tous ces exemples, il y a plus d'acide pyromellitique que de diamine. Pour comparaison, un exemple 5E est effectué avec un rapport R=0,93, c'est-à-dire un cas où il y a moins d'acide pyromellitique que de diamine. Dans le tableau 2 sont référencés les viscosités des polyimides obtenus. Il apparaît que lorsqu'il y a plus de diamine, le polyimide obtenu est insoluble, signe d'un branchement ou d'une réticulation importante. Lorsqu'il y a plus d'acide pyromellitique, le polyimide obtenu présente une bonne solubilité et la viscosité en solution est d'autant plus faible que le rapport R est grand. Cette voie de déséquilibre stoechiométrique de sels permet de moduler la viscosité des polyimides obtenus par la voie sel.

**Tableau 2**

| **Exemples** | **R** | **Viscosité en solution** |
|---|---|---|
| 5A | 1,02 | 2,06 |
| 5B | 1,04 | 1,56 |
| 5C | 1,08 | 1,49 |
| 5D | 1,12 | 1,45 |
| 5E | 0,93 | insoluble |

La masse molaire moyenne en nombre des échantillons 5A et 5D est déterminée en RMN du proton dans le D₂SO₄ comme solvant à 300 Kelvin. Les échantillons ne présentent pas d'extrémités amine comme attendu en raison du déséquilibre stoechiométrique choisi en faveur des fonctions acides. On peut donc calculer la masse molaire moyenne en nombre par l'équation : Mn=DPnxM° avec M°=(Mdiamine+MPMA-18x4)/2=191 g/mol et DPn=(Ndiamine+NPMA)/(Nbout de chaîne/2, soit Mn=13800 g/mol pour l'exemple 5A et Mn=5600 g/mol pour l'exemple 5D.

### Exemple 6: Préparation de polyimide PI 12PMA de faible viscosité par utilisation de limiteur de chaîne à partir d'un sel 12PMA synthétisé dans l'éthanol pur

Afin de préparer des polyimides préparés à partir de sel de polyimides ayant une viscosité plus faible, un limiteur de chaîne, la 1-aminododécane, a été introduit.

**Exemple 6A :** dans un réacteur de 2L sont introduits 17,07 g (0,0655 mol) d'acide pyromellitique à 97,6% et 550 g d'éthanol pur. Le milieu réactionnel est agité sous léger balayage d'azote. Dans un ballon de 500 mL, on dissout 13,15 g (0,0649 mol) de 1,12-diaminododécane à 98,9% (TCI Europe N.V.) et 0,2530 g (0,00137 mol) de 1-aminododécane à 98% dans 200 g d'éthanol pur à 60°C. Cette solution est ensuite placée dans une ampoule de coulée raccordée au réacteur 2L et ajoutée goutte-à-goutte en 1 heure à la solution éthanolique d'acide pyromellitique. Le contact entre la diamine, la monoamine et l'acide pyromellitique engendre la formation d'un sel qui précipite immédiatement sous agitation vigoureuse. Le milieu réactionnel est chauffé à 70°C et maintenu sous agitation vigoureuse pendant 2h 30 min sous azote. La poudre de sel est récupérée par filtration sur Büchner et lavée à l'éthanol, puis broyée et séchée sous vide à 45°C pendant une nuit. Le rendement massique est de 98,8%. La poudre est blanche et fine. L'analyse RMN du sel indique la présence de 1,8% en mol de 1-aminododécane par rapport au mélange de 1-aminododécane et de 1,12-diaminododécane.

La poudre de sel est placée dans un ballon cannelé fixé sur un appareil rotavapeur et mis sous léger balayage d'azote. La pression est égale à la pression atmosphérique. Le ballon est plongé dans un bain d'huile à 200°C et mis en rotation pendant 5 heures. La poudre de PI 12PMA obtenue est blanche et parfaitement sèche.

La poudre de polyimide obtenue est analysée par mesure de la viscosité relative solution dans l'acide sulfurique à 96% d'une solution à 10 g/L de polyimide dans un tube Ubbelohde de diamètre 1,03 mm associé à un viscosimètre SHOTT de référence AVS350 et à une température de 25°C. La viscosité relative est de 4,9.

**Exemple 6B** : le même protocole est utilisé mais en utilisant 1,6725 g (0,00642 mol) d'acide pyromellitique à 97,6% dissout dans 60 g d'éthanol, et un mélange de 1,2475 g (0,00616 mol) de 1,12-diaminododécane à 98,9% et de 0,1023 g (0,00054 mol) de 1-aminododécane à 98%. Le polyimide obtenu présente une viscosité relative de 2,61.

La couleur de la poudre de PI 12PMA de l'exemple 6B est analysée. Elle a les caractéristiques colorimétriques suivantes CIE L*=98,17, a*=0,20, b*=2,66, ce qui indique que la poudre est très blanche. Il est considéré ici, qu'une poudre est blanche quand b*≤10 et légèrement jaune quand b*>10. Ainsi, le procédé de polymérisation selon l'invention permet d'éviter des colorations. Sans vouloir être liée à aucune théorie, ceci peut être dû soit à des dégradations, soit à la présence de solvant résiduels, comme c'est le cas dans les polymérisations de polyimides par en voie fondue, au-delà de la température de fusion du polyimide, ou par voie solvant.

Le polyimide 6B est injecté à l'aide d'une micro-presse à injecter associée au « micro-compounder » par fusion du PI 12PMA à 320°C et injection dans un moule régulé à 180°C pour former des barreaux de dimension 80x12x2 mm³. Les barreaux sont rigides mais présentent une certaine flexibilité. Une analyse mécanique dynamique en flexion trois points (déformation imposée de 0,01%, fréquence 1 Hz) est effectuée sur un appareil TA Instrument RSA3. A 23°C, le module E' est égal à 2,2 GPa.

**Exemple 6C** : le même protocole est utilisé mais en utilisant 28,1459 g (0,10809 mol) d'acide pyromellitique à 97,6% dissout dans 535 g d'éthanol, et un mélange de 21,3347 g (0,10531 mol) de 1,12-diaminododécane à 98,9% et de 1,0556 g (0,00558 mol) de 1-aminododécane à 98%. Cette fois-ci, le précipité de sel est récupéré par évaporation de l'éthanol sous pression réduite puis est broyé. Le polyimide obtenu présente une viscosité relative de 1,76.

1 g du polyimide de l'exemple 6C est placé dans un tube à essai et inerté à l'azote. Le tube est placé dans un bloc chauffé à 320°C (au-dessus de la température de fusion du polyimide) pendant 40 min. Après 40 min, la viscosité relative est déterminée à 1,66, ce qui montre que la viscosité du polyimide n'a changé que de 6% lors de son passage à l'état fondu pendant 40 min. La première conclusion est que la viscosité n'a pas augmenté, signifiant que le procédé de synthèse permet d'atteindre des masses molaires suffisantes et contrôlées et la seconde conclusion est que le PI 12PMA bloqué par la 1-aminododécane présente donc une bonne stabilité thermique.

### Exemple 7 : préparation de composite PI 12PMA / tissu de carbone

Un lot de 200 g de poudre de polyimide PI 12PMA bloqué par de la 12-aminododécane de viscosité relative 1,7 est utilisé pour faire un composite thermoplastique PI 12PMA / tissu de carbone. Le polyimide utilisé a été synthétisés selon les procédés décrits précédemment dans l'exemple 6C.
Avant utilisation, la poudre est séchée une nuit sous vide à 90°C.

Le renfort utilisé dans cet exemple est sous forme de préformes en tissus de carbone, coupées aux dimensions requises pour la fabrication de plaques c'est-à-dire 100 x 150 mm. L'étoffe de renfort utilisée est un tissu équilibré en fibre de carbone (0°-90°) d'origine Hexcel, présentant un grammage de 200 g/m² (3K).

La réalisation des pièces composites est faite au moyen d'une presse hydraulique 100 tonnes à double plateaux contrôlée en force et équipée d'un moule à chauffage par induction (technologie RocTool®), et refroidis (circulation d'eau). Le moule métallique est dotée d'une empreinte de dimensions 150 mm x 150 mm.

Pour réaliser un composite contenant 55% volume de fibres de carbone avec le tissus de grammage 200 g/m² (3K), on réalise une préforme par empilement de pli de carbone, chaque pli étant poudré de façon relativement homogène avec de la poudre de polyimide. Dans l'exemple considéré, il a été utilisé 10 plis de carbone (200 g/m²). On introduit alors la préforme constituée de l'empilement de plis poudrés dans le moule.

Après introduction de la préforme et fermeture du moule sous très faible pression, la température des plateaux de la presse est alors montée à 320°C en 80 secondes. Un palier est réalisé sous très faible pression pendant 60 secondes à 320°C. A la fin du palier (60 seconde), une pression est appliquée pendant 20 secondes : 25 bars vérin. Le refroidissement est réalisé sous pression en 6minutes et 30 secondes : démoulage des plaques à 50°C environ. Le temps de cycle total est inférieur à 10 minutes.

Les plaques obtenues présentent une épaisseur de 2,12 mm. Les articles composites selon l'invention présentent un très bon aspect de surface.

Il est ainsi possible d'obtenir des articles composites en utilisant les polyimides selon l'invention, particulièrement en procédant à des cycles de fabrication extrêmement courts.

## Revendications

1. Procédé d'obtention de particules solides de (co)polyimide (I) semi-aromatique et semi-cristallin présentant un diamètre médian D50 compris entre 0,01 et 2 mm, ledit polyimide est thermoplastique et présente une température de fusion comprise entre 50 et 350°C, comprenant au moins les étapes suivantes :
(a) on place dans un réacteur un sel formé par une réaction entre au moins une diamine aliphatique dans laquelle les fonctions amines sont chacune portées par un carbone aliphatique, et au moins un acide tétracarboxylique aromatique;
(b) on effectue une polymérisation à l'état solide à partir du sel de l'étape (a) pour obtenir le (co)polyimide (I) à une pression absolue comprise entre 0,005 et 1 MPa et à une température T obéissant à la relation suivante :
***Tf du sel de l'étape (a) > T > Tg du (co)polyimide (I) à obtenir***
(c) on récupère les particules solides (co)polyimide (I);
le diamètre médian D50 étant la médiane qui sépare en 2 parties d'aires égales la courbe de répartition granulométrique en volume, cette courbe étant mesurée au moyen d'un granulomètre à diffraction laser Mastersizer X à banc optique étendu de la Société Malvern Instruments SA permettant de caractériser des tailles de particules comprises entre 2 et 2000 µm.

2. Procédé selon la revendication 1, **caractérisé en ce que** le (co)polyimide présente une température de transition vitreuse Tg inférieure ou égale à 200°C.

3. Procédé selon la revendication 1 ou 2, **caractérisé en ce que** les acides tétracarboxyliques aromatiques sont choisis dans le groupe constitué par l'acide pyromellitique, l'acide 3,3',4,4'-biphényltétracarboxylique, l'acide 2,3,3',4'-biphényltétracarboxylique, l'acide 2,2',3,3'-biphényltétracarboxylique, l'acide 3,3',4,4'-benzophénonetétracarboxylique, l'acide 2,2',3,3'-benzophénonetétracarboxylique, l'acide 1,2,5,6-naphthalènetétracarboxylique, l'acide 2,3,6,7-naphthalènetétracarboxylique, l'acide 2,3,5,6-pyridinetétracarboxylique, l'acide 3,4,9,10-perylènetétracarboxylique, l'acide 3,3',4,4'-tétraphénylsilanetétracarboxylique, et l'acide 2,2'-bis-(3,4-bicarboxyphenyl) hexafluoropropane tétracarboxylique, et **en ce que** les diamines aliphatiques sont des molécules de formule NH₂-R-NH₂ avec un radical R divalent hydrocarboné et aliphatique saturé ou insaturé, linéaire ou branché, cycloaliphatique ou alkylaromatique, comprenant éventuellement un ou plusieurs hétéroatomes.

4. Procédé selon la revendication 3, **caractérisé en ce que** le radical R comprend de 2 à 50 atomes de carbone, et éventuellement un ou plusieurs hétéroatomes.

5. Procédé selon la revendication 3 ou 4 , **caractérisé en ce que** les diamines aliphatiques sont choisies dans le groupe constitué par : le 1,2-diaminoéthane, le 1,3-diaminopropane, le 1,4-diaminobutane, le 1,5-diaminopentane, le 2-méthyl-1,5-diaminopentane, l'hexaméthylène diamine, la 3-méthyl-hexaméthylène diamine, la 2,5-diméthyl-hexaméthylène diamine, la 2,2,4- et 2,4,4-triméthyl-hexaméthylène diamine, le 1,7-diaminoheptane, le 1,8-diaminooctane, la 2,2,7,7-tétraméthyl-octaméthylène diamine, le 1,9-diaminonane, la 5-méthyl-1,9-diaminononane, le 1,10-diaminodécane, le 1,11-diaminoundécane, le 1,12-diaminododécane, le 1,13-diaminotridécane, et le 1,14-diaminotétradécane, ou **en ce que** les diamines cycloaliphatiques sont choisies dans le groupe constitué par : l'isophorone diamine, le 1,3-diaminocyclohexane, le 1,4-diaminocyclohexane, et le diaminodicyclohexyl-méthane, ou **en ce que** les diamines alkylaromatiques sont de formule NH₂-(CH₂)n-Ph-(CH₂)n'-NH₂ avec n et n' étant des nombres entiers non nuls indépendants l'un de l'autre et avantageusement compris entre 1 et 4, et Ph étant un groupe phényle.

6. Procédé selon l'une quelconque des revendications 1 à 5, **caractérisé en ce que** le sel est :
- additionné d'au moins un, et notamment de un, limiteur de chaîne et/ou
- additionné d'un excès d'un des monomères, notamment d'acide tétracarboxylique, afin de créer un déséquilibre stoechiométrique, c'est-à-dire afin que r soit différent de 1, r étant égal au rapport [acide tétracarboxylique]/[diamine].

7. Procédé selon l'une quelconque des revendications 1 à 6, **caractérisé en ce que** la pression absolue lors de l'étape (b) est comprise entre 0,005 MPa et 0,2 MPa, et **caractérisé en ce que** la température lors de l'étape (b) est comprise entre 50°C et 250°C.

8. Procédé selon l'une quelconque des revendications 1 à 7, **caractérisé en ce que** la masse molaire moyenne en nombre Mn du (co)polyimide (I) est comprise entre 500 g/mol à 50000 g/mol.

9. Particules solides de (co)polyimide (I) semi-aromatique et semi-cristallin présentant un diamètre médian D50 compris entre 0,01 et 2 mm, ledit polyimide est thermoplastique et présente une température de fusion comprise entre 50 et 350°C ; ce (co)polyimide étant obtenu à partir d'un sel formé par une réaction entre au moins une diamine aliphatique dans laquelle les fonctions amines sont chacune portées par un carbone aliphatique, et au moins un acide tétracarboxylique aromatique,
le diamètre médian D50 étant la médiane qui sépare en 2 parties d'aires égales la courbe de répartition granulométrique en volume, cette courbe étant mesurée au moyen d'un granulomètre à diffraction laser Mastersizer X à banc optique étendu de la Société Malvern Instruments SA permettant de caractériser des tailles de particules comprises entre 2 et 2000 µm.

10. Procédé de fabrication d'une composition par mélange, en fondu ou non, de particules solides de (co)polyimides (I) selon la revendication 9 avec des charges de renfort ou de remplissage et/ou des agents modificateurs du choc et/ou des additifs.

11. Procédé de fabrication d'article plastique mettant en oeuvre des particules solides de (co)polyimide (I) selon la revendication 9.

## Patentansprüche

1. Verfahren zum Erhalten von festen halbaromatischen und halbkristallinen (Co)polyimidpartikeln (I), die einen mittleren Durchmesser D50 im Bereich zwischen 0,01 und 2 mm aufweisen, wobei das Polyimid thermoplastisch ist und eine Schmelztemperatur im Bereich zwischen 50 und 350 °C aufweist, umfassend mindestens die folgenden Schritte:
(a) Anordnen, in einem Reaktor, eines Salzes, das durch eine Umsetzung mindestens eines aliphatischen Diamins, in dem die Aminfunktionen jeweils von einem aliphatischen Kohlenstoff getragen werden, mit mindestens einer aromatischen Tetracarbonsäure gebildet wird;
(b) Durchführen einer Festphasenpolymerisation aus dem Salz aus Schritt (a), um das (Co)polyimid (I) bei einem absoluten Druck im Bereich zwischen 0,005 und 1 MPa und bei einer Temperatur T zu erhalten, die der folgenden Relation entspricht:
***Tf des Salzes aus Schritt (a) > T > Tg des zu erhaltenden (Co)polyimids (I)***
(c) Rückgewinnen der festen (Co)polyimidpartikel (I);
wobei der mittlere Durchmesser D50 der Median ist, der die Flächen der volumentrischen Korngrößenverteilungskurve in 2 gleiche Teile teilt, wobei diese Kurve mittels eines Mastersizer-X-Laserbeugungs-Partikelgrößenmessgeräts mit einer umfangreichen optischen Bank von der Firma Malvern Instruments SA, das es ermöglicht, Partikelgrößen im Bereich zwischen 2 und 2.000 µm zu charakterisieren, gemessen wird.

2. Verfahren nach Anspruch 1, **dadurch gekennzeichnet, dass** das (Co)polyimid eine Glasübergangstemperatur Tg kleiner oder gleich 200 °C aufweist.

3. Verfahren nach Anspruch 1 oder 2, **dadurch gekennzeichnet, dass** die aromatischen Tetracarbonsäuren ausgewählt sind aus der Gruppe, bestehend aus Pyromellitsäure, 3,3',4,4'-Biphenyltetracarbonsäure, 2,3,3',4'-Biphenyltetracarbonsäure, 2,2',3,3'-Biphenyltetracarbonsäure, 3,3',4,4'-Benzophenontetracarbonsäure, 2,2',3,3'-Benzophenontetracarbonsäure, 1,2,5,6-Naphthalintetracarbonsäure, 2,3,6,7-Naphthalintetracarbonsäure, 2,3,5,6-Pyridintetracarbonsäure, 3,4,9,10-Perylentetracarbonsäure, 3,3',4,4'-Tetraphenylsilantetracarbonsäure und 2,2'-bis-(3,4-Bicarboxyphenyl)hexafluorpropan-tetracarbonsäure, und dadurch, dass die aliphatischen Diamine Moleküle der Formel NH₂-R-NH₂ sind, wobei R ein zweiwertiger und aliphatischer, gesättigter oder ungesättigter, linearer oder verzweigter cycloaliphatischer oder alkylaromatischer Kohlenwasserstoffrest ist, der gegebenenfalls ein oder mehrere Heteroatome umfasst.

4. Verfahren nach Anspruch 3, **dadurch gekennzeichnet, dass** der Rest R 2 bis 50 Kohlenstoffatome und gegebenenfalls ein oder mehrere Heteroatome umfasst.

5. Verfahren nach Anspruch 3 oder 4, **dadurch gekennzeichnet, dass** die aliphatischen Diamine ausgewählt sind aus der Gruppe bestehend aus: 1,2-Diaminoethan, 1,3-Diaminopropan, 1,4-Diaminobutan, 1,5-Diaminopentan, 2-Methyl-1,5-diaminopentan, Hexamethylendiamin, 3-Methylhexamethylendiamin, 2,5-Dimethyl-hexamethylendiamin, 2,2,4- und 2,4,4-Trimethyl-hexamethylendiamin, 1,7-Diaminoheptan, 1,8-Diaminooctan, 2,2,7,7-Tetramethyl-octamethylendiamin, 1,9-Diaminonan, 5-Methyl-1,9-diaminononan, 1,10-Diaminodecan, 1,11-Diaminoundecan, 1,12-Diaminododecan, 1,13-Diaminotridecan und 1,14-Diaminotetradecan, oder dadurch, dass die cycloaliphatischen Diamine ausgewählt sind aus der Gruppe bestehend aus: Isophorondiamin, 1,3-Diaminocyclohexan, 1,4-Diaminocyclohexan und Diaminodicyclohexylmethan oder dadurch, dass die alkylaromatischen Diamine die Formel NH₂-(CH₂)n-Ph-(CH₂)n'-NH₂ aufweisen, wobei n und n' unabhängig voneinander ganze Zahlen sind, die nicht null sind und vorteilhafterweise im Bereich zwischen 1 und 4 liegen, und wobei Ph eine Phenylgruppe ist.

6. Verfahren nach einem der Ansprüche 1 bis 5, **dadurch gekennzeichnet, dass** das Salz:
- um mindestens einen und insbesondere einen Kettenbegrenzer ergänzt ist und/oder
- um einen Überschuss von einem der Monomere, insbesondere Tetracarbonsäure, ergänzt ist, um ein stöchiometrisches Ungleichgewicht zu erzeugen, das heißt damit r verschieden von 1 ist, wobei r gleich dem [Tetracarbonsäure]/[Diamin]-Verhältnis ist.

7. Verfahren nach einem der Ansprüche 1 bis 6, **dadurch gekennzeichnet, dass** der absolute Druck im Verlauf von Schritt (b) im Bereich zwischen 0,005 MPa und 0,2 MPa liegt, und **dadurch gekennzeichnet, dass** die Temperatur im Verlauf von Schritt (b) im Bereich zwischen 50 °C und 250 °C liegt.

8. Verfahren nach einem der Ansprüche 1 bis 7, **dadurch gekennzeichnet, dass** die zahlenmittlere Molmasse Mn des (Co)polyimids (I) im Bereich zwischen 500 g/mol bis 50.000 g/mol liegt.

9. Feste halbaromatische und halbkristalline (Co)polyimidpartikel (I), die einen mittleren Durchmesser D50 im Bereich zwischen 0,01 und 2 mm aufweisen, wobei das Polyimid thermoplastisch ist und eine Schmelztemperatur im Bereich zwischen 50 und 350 °C aufweist; wobei dieses (Co)polyimid aus einem Salz erhalten wird, das durch eine Umsetzung mindestens eines aliphatischen Diamins, in dem die Aminfunktionen jeweils von einem aliphatischen Kohlenstoff getragen werden, mit mindestens einer aromatischen Tetracarbonsäure gebildet wird;
wobei der mittlere Durchmesser D50 der Median ist, der die Flächen der volumentrischen Korngrößenverteilungskurve in 2 gleiche Teile teilt, wobei diese Kurve mittels eines Mastersizer-X-Laserbeugungs-Partikelgrößenmessgeräts mit einer umfangreichen optischen Bank von der Firma Malvern Instruments SA, das es ermöglicht, Partikelgrößen im Bereich zwischen 2 und 2.000 µm zu charakterisieren, gemessen wird.

10. Verfahren zur Herstellung einer Zusammensetzung durch Mischen in geschmolzenem oder nicht geschmolzenem Zustand von festen (Co)polyimidpartikeln (I) nach Anspruch 9 mit Verstärkungsstoffen oder Füllstoffen und/oder Schlagzähmodifikatoren und/oder Zusatzstoffen.

11. Verfahren zur Herstellung von Kunststoffgegenständen, bei dem feste (Co)polyimidpartikel (I) nach Anspruch 9 eingesetzt werden.

## Claims

1. Process for producing solid particles of semicrystalline and semiaromatic (co)polyimide (I), having a median diameter D50 of between 0.01 and 2 mm, said polyimide being thermoplastic and having a melting temperature of between 50 and 350°C, which comprises at least the following steps:
(a) a reactor is charged with a salt formed by reaction of at least one aliphatic diamine, in which the amine functions are each carried by an aliphatic carbon, with at least one aromatic tetracarboxylic acid;
(b) the salt from step (a) is subjected to polymerization in the solid state to give the (co)polyimide (I), at an absolute pressure of between 0.005 and 1 MPa and at a temperature T which obeys the following relation:
***Tf of the salt from step (a) > T > Tg of the (co)polyimide (I) to be obtained;***
(c) the solid (co)polyimide (I) particles are recovered;
the median diameter D50 being the median which separates the curve of particle size distribution by volume into two parts of equal areas, this curve being measured using a Mastersizer X laser diffraction particle sizer having an extensive optical bench from Malvern Instruments S.A., making it possible to characterize particle sizes of between 2 and 2000 µm.

2. Process according to Claim 1, **characterized in that** the (co)polyimide has a glass transition temperature Tg of less than or equal to 200°C.

3. Process according to Claim 1 or 2, **characterized in that** the aromatic tetracarboxylic acids are selected from the group consisting of pyromellitic acid, 3,3',4,4'-biphenyltetracarboxylic acid, 2,3,3',4'-biphenyltetracarboxylic acid, 2,2',3,3'-biphenyltetracarboxylic acid, 3,3',4,4'-benzophenonetetracarboxylic acid, 2,2',3,3'-benzophenonetetracarboxylic acid, 1,2,5,6-naphthalenetetracarboxylic acid, 2,3,6,7-naphthalenetetracarboxylic acid, 2,3,5,6-pyridinetetracarboxylic acid, 3,4,9,10-perylenetetracarboxylic acid, 3,3',4,4'-tetraphenylsilanetetracarboxylic acid, and 2,2'-bis(3,4-bicarboxyphenyl) hexafluoropropanetetracarboxylic acid, and **in that** the aliphatic diamines are molecules of formula NH₂-R-NH₂ with a divalent alkylaromatic or cycloaliphatic, or linear or branched, saturated or unsaturated aliphatic hydrocarbon radical R, optionally comprising one or more heteroatoms.

4. Process according to Claim 3, **characterized in that** the radical R comprises from 2 to 50 carbon atoms, and optionally one or more heteroatoms.

5. Process according to Claim 3 or 4, **characterized in that** the aliphatic diamines are selected from the group consisting of the following: 1,2-diaminoethane, 1,3-diaminopropane, 1,4-diaminobutane, 1,5-diaminopentane, 2-methyl-1,5-diaminopentane, hexamethylenediamine, 3-methylhexamethylenediamine, 2,5-dimethylhexamethylenediamine, 2,2,4- and 2,4,4-trimethylhexamethylenediamine, 1,7-diaminoheptane, 1,8-diaminooctane, 2,2,7,7-tetramethyloctamethylenediamine, 1,9-diaminononane, 5-methyl-1,9-diaminononane, 1,10-diaminodecane, 1,11-diaminoundecane, 1,12-diaminododecane, 1,13-diaminotridecane, and 1,14-diaminotetradecane, or **in that** the cycloaliphatic diamines are selected from the group consisting of the following: isophoronediamine, 1,3-diaminocyclohexane, 1,4-diaminocyclohexane, and diaminodicyclohexylmethane, or **in that** the alkylaromatic diamines are of formula NH₂-(CH₂)n-Ph-(CH₂)n'-NH₂ where n and n' are nonzero integral numbers which are independent of one another and advantageously between 1 and 4, and Ph is a phenyl group.

6. Process according to any one of Claims 1 to 5, **characterized in that** the salt is:
- admixed with at least one, and in particular one, chain transfer agent, and/or
- admixed with an excess of one of the monomers, especially tetracarboxylic acid, so as to create a stoichiometric imbalance, in other words such that r is other than 1, r being equal to the ratio [tetracarboxylic acid]/[diamine].

7. Process according to any one of Claims 1 to 6, **characterized in that** the absolute pressure during step (b) is between 0.005 MPa and 0.2 MPa, and **characterized in that** the temperature during step (b) is between 50°C and 250°C.

8. Process according to any one of Claims 1 to 7, **characterized in that** the number-average molar mass Mn of the (co)polyimide (I) is between 500 g/mol to 50 000 g/mol.

9. Solid particles of semicrystalline and semiaromatic (co)polyimide (I), having a median diameter D50 of between 0.01 and 2 mm, said polyimide being thermoplastic and having a melting temperature of between 50 and 350°C, said (co)polyimide being obtained from a salt formed by reacting at least one aliphatic diamine in which the amine functions are each carried by an aliphatic carbon, with at least one aromatic tetracarboxylic acid,
the median diameter D50 being the median which separates the curve of particle size distribution by volume into two parts of equal areas, this curve being measured using a Mastersizer X laser diffraction particle sizer having an extensive optical bench from Malvern Instruments S.A., making it possible to characterize particle sizes of between 2 and 2000 µm.

10. Process for producing a composition by melt or nonmelt mixing of solid particles of (co)polyimides (I) according to Claim 9 with reinforcing or bulking fillers and/or with impact modifiers and/or with additives.

11. Process for producing a plastics article, employing solid particles of (co)polyimide (I) according to Claim 9.
